# EUROPEAN PATENT SPECIFICATION

(11) **EP 2 685 315 B1**
(45) Date of publication and mention of the grant of the patent: **04.12.2019**
(21) Application number: 13165304.0
(22) Date of filing: 25.04.2013
(51) Int. Cl.: G03G 15/00, G03G 15/01

(54) **Image forming apparatus for performing registration and density correction control**
Bilderzeugungsvorrichtung zur Durchführung von Registrierung und Dichtekorrektursteuerung
Appareil de formation d'image pour effectuer une commande de correction de densité et de repérage

(30) Priority: 11.05.2012 JP 2012109933
(43) Date of publication of application: 15.01.2014
(73) Proprietor: Canon Kabushiki Kaisha, Tokyo 146-8501 (JP)
(72) Inventor: Shimba, Takeshi, Tokyo, Tokyo 146-8501 (JP); Nakagawa, Ken, Tokyo, Tokyo 146-8501 (JP); Watanabe, Shinri, Tokyo, Tokyo 146-8501 (JP)
(74) Representative: TBK

(56) References cited:
- EP-A2- 2 388 652
- EP-A2- 2 525 261
- JP-A- H11 143 171
- US-A1- 2001 004 425
- US-A1- 2011 243 588
- US-A1- 2011 280 595

## Description

### BACKGROUND OF THE INVENTION

### Field of the Invention

The present invention principally relates to an image forming apparatus such as an electrophotographic type or electrostatic printing type copying machine or printer. In particular, the present invention relates to the detection control of the tint and positions of developer images of colors formed in an image forming apparatus.

### Description of the Related Art

In a color image forming apparatus including a plurality of photosensitive members, misregistration occurs between images of different colors due to, e.g., mechanical mounting errors of the photosensitive members, or optical path length differences or optical path changes of laser beams of different colors. Also, the image density for each color fluctuates due to various conditions such as the usage environment and the number of copies, therefore, the color balance, that is, the tint changes.

In an image forming apparatus, therefore, registration correction and density correction are performed between images of different colors. Japanese Patent Laid-Open No. 11-143171 has proposed a method of detecting and correcting misregistration and detecting and correcting densities by forming a registration detection pattern and density detection pattern on an intermediate transfer belt. Japanese Patent Laid-Open No. 11-143171 avoids increases in size and cost of the apparatus by detecting the registration and density detection patterns by using the same sensor.

Also, Japanese Patent Laid-Open No. 2001-166553 has disclosed a method of forming both registration and density detection patterns on an intermediate transfer belt, and correcting the misregistration and densities by the same sequence, thereby shortening the time required for the correction.

In the related art, the correction control time is shortened by correcting the misregistration and densities by the same sequence. In this method, a plurality of registration detection patterns and a plurality of density detection patterns may be repetitively formed on an intermediate transfer belt, in order to avoid the influence of periodical variations generated by the rotation periods of, for example, photosensitive members or rollers for driving the intermediate transfer belt, because the photosensitive members or rollers are off-centered. To correct misregistration and densities by the same sequence, the detection patterns must be formed within one circumference of the intermediate transfer belt. As image forming apparatuses have been downsized recently, however, the circumference of the intermediate transfer belt shortens. Accordingly, demands have arisen for accurately correcting misregistration and densities even with a short pattern length.

Document EP 2 388 625 A2 discloses that a low density area is caused at a trailing edge of an image formed on a photosensitive drum. This low density area is less likely to be caused when the density of the image is higher and the humidity is lower. To prevent generation of such low density area, if a color misregistration detection toner pattern having a high density is formed, in a low humidity environment, an excessively large amount of toner is consumed unnecessarily. In response, the density of the color misregistration detection toner pattern is adjusted based on the humidity.

Document US 2011/243588 A1 discloses an image forming apparatus that can reduce the time required for adjustment operations when a first adjustment operation that requires speed change and a second adjustment operation that does not require speed change overlap.

Document US 2011/280595 A1 discloses a detecting apparatus including an illumination optical system for emitting an image bearing member with a light beam emitted from a light source unit, an imaging optical system including an imaging optical element for imaging an image on the surface of the image bearing member, a light receiving unit for detecting the image on the image bearing member which has been imaged by the imaging optical system, and a calculation unit for detecting image information on the image on the image bearing member from a detection signal received from the light receiving unit.

### SUMMARY OF THE INVENTION

The present invention provides an image forming apparatus for accurately correcting misregistration and densities by using short detection patterns.

The present invention is realized, for example, on an image forming apparatus as specified in claims 1 to 9.

Further features of the present invention will become apparent from the following description of exemplary embodiments with reference to the attached drawings.

### BRIEF DESCRIPTION OF THE DRAWINGS

Fig. 1 is a view showing the arrangement of an image forming unit of an image forming apparatus according to an embodiment;
Fig. 2 is a view showing the arrangement of a registration correction/density correction sensor according to an embodiment;
Figs. 3A and 3B are views showing the arrangement of the image forming apparatus according to an embodiment;
Figs. 4A and 4B are views showing a registration detection pattern and density detection pattern according to an embodiment;
Figs. 5A and 5B are flowcharts of correction control according to an embodiment;
Figs. 6A and 6B are views showing the layouts of the detection patterns according to an embodiment;
Figs. 7A and 7B are views showing the layouts of the detection patterns according to an embodiment;
Fig. 8 is a flowchart of correction control according to an embodiment; and
Figs. 9A and 9B are views showing the layouts of detection patterns according to an embodiment.

### DESCRIPTION OF THE EMBODIMENTS

Exemplary embodiments of the present invention will be explained below with reference to the accompanying drawings. Note that constituent elements unnecessary for explaining the embodiments will be omitted from each drawing.

### <First Embodiment>

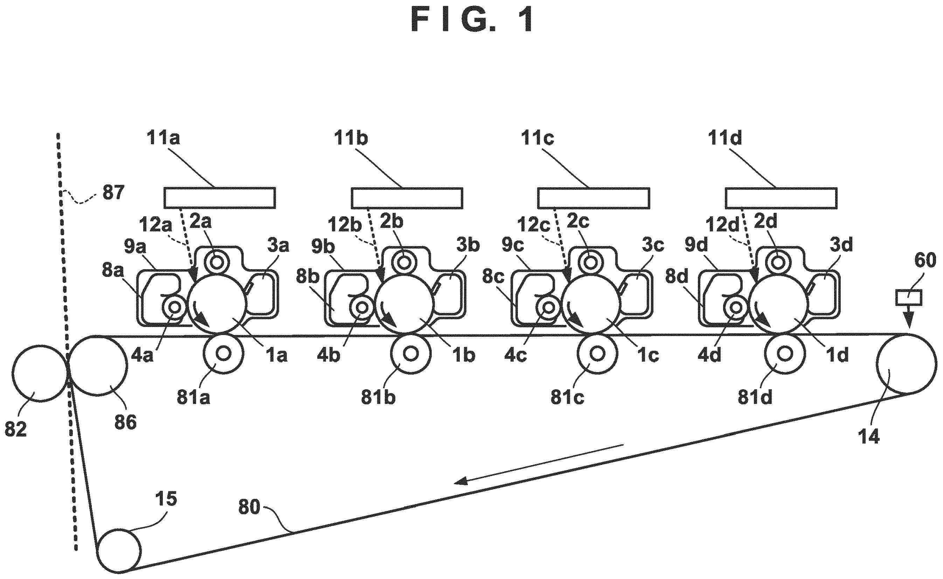

Fig. 1 is a view showing the arrangement of an image forming unit of an image forming apparatus of this embodiment. In Fig. 1, constituent elements denoted by reference numerals suffixed by characters a, b, c, and d are respectively the constituent elements of first, second, third, and fourth stations. Note that in this embodiment, the first, second, third, and fourth stations are image forming stations for forming toner images as developer images of yellow (Y), magenta (M), cyan (C), and black (K), respectively, on an intermediate transfer belt 80 as an image carrier. Note also that the first to fourth stations have the same arrangement except for the colors of toners as developers, so reference numerals not suffixed by the characters a, b, c, and d will be used in the following explanation when it is unnecessary to distinguish between the colors.

A charging roller 2 is contact with a photosensitive member 1 rotating in a direction indicated by the arrow, and charges the surface of the photosensitive member 1 to negative polarity. An exposure unit 11 scans the photosensitive member 1 with a scanning beam 12 modulated based on an image signal, thereby forming an electrostatic latent image on the photosensitive member 1. A developing unit 8 contains toner of a corresponding color, and develops the electrostatic latent image on the photosensitive member 1 with the toner by using a developing bias applied to a developing roller 4, thereby forming a toner image. A primary transfer roller 81 applies a DC bias having polarity (positive polarity) opposite to that of the toner, thereby transferring the toner image on the corresponding photosensitive member 1 to the intermediate transfer belt 80. In addition, a cleaning unit 3 removes the toner not transferred to the intermediate transfer belt 80 and remaining on the photosensitive member 1. In this embodiment, the photosensitive member 1, developing unit 8, charging roller 2, and cleaning unit 3 form an integrated process cartridge 9 detachable from the image forming apparatus.

The intermediate transfer belt 80 is supported by three rollers, that is, a secondary transfer counter roller 86, driving roller 14, and tension roller 15 as extension members, and maintained at an appropriate tension. When the driving roller 14 is driven, the intermediate transfer belt 80 rotates in a direction indicated by the arrow and moves at almost the same speed in a forward direction with respect to the photosensitive member 1. The first to fourth stations transfer toner images of the individual colors to the intermediate transfer belt 80 by superimposing the images, thereby forming a color image on the intermediate transfer belt 80. This toner image formed on the intermediate transfer belt 80 is transferred to a printing material conveyed by a convey path 87 by a secondary transfer roller 82. After that, the toner image transferred to the printing material is fixed on it by a fixing unit (not shown). In this embodiment, a sensor unit 60 for registration correction and density correction is provided downstream of the fourth station above the intermediate transfer belt 80 in the conveyance direction.

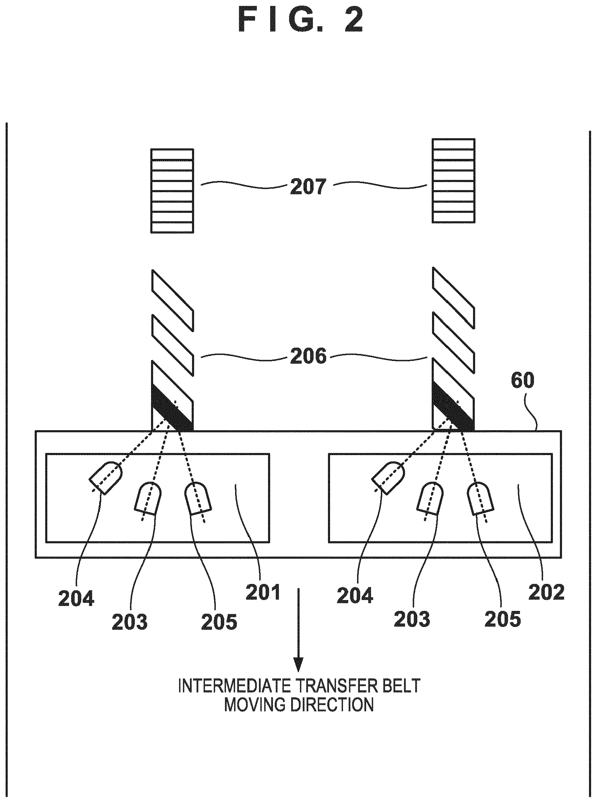

Fig. 2 is a view showing the arrangement of the sensor unit 60 according to this embodiment. The sensor unit 60 of this embodiment includes two sensors 201 and 202 having the same arrangement. The sensor 201 detects a detection pattern formed in the vicinity of one end portion of the intermediate transfer belt 80 in a direction perpendicular to the moving direction of the surface. The sensor 202 detects a detection pattern formed in the vicinity of the other end portion of the intermediate transfer belt 80. Each of the sensors 201 and 202 includes a light-emitting element 203 for emitting light toward the intermediate transfer belt 80, and light-receiving elements 204 and 205 for receiving light emitted by the light-emitting element 203 and reflected by the surface of the intermediate transfer belt 80 or by the detection pattern formed on the surface. Note that the light-receiving element 204 receives diffuse reflection light reflected by the surface of the intermediate transfer belt 80 or the detection pattern, the light-receiving element 205 receives specular reflection light, and the light-receiving elements 204 and 205 each output a detection voltage corresponding to the received light amount. Although the two sensors are formed in Fig. 2, three or more sensors may also be formed. It is also possible to detect misregistration by using two or more sensors, and detect densities by using one or more sensors.

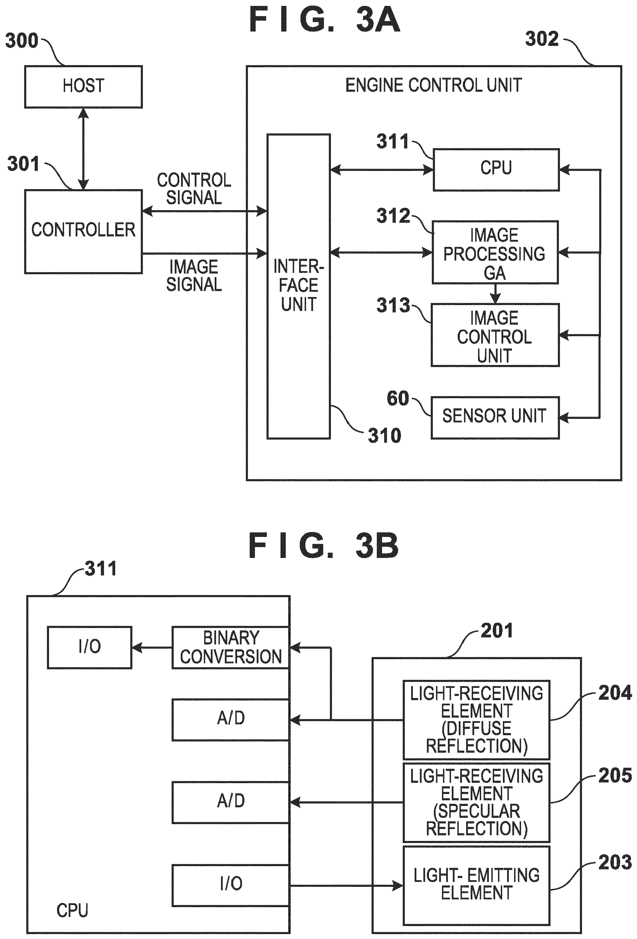

Fig. 3A is a view showing the arrangement of the image forming apparatus according to this embodiment. As shown in Fig. 3A, a controller 301 can communicate with a host computer 300 and engine control unit 302. When executing registration and density correction control, the controller 301 outputs a correction control start command to the engine control unit 302. Upon receiving the correction control start command via an interface unit 310, a CPU 311 instructs an image control unit 313 to start correction control. When receiving the instruction to start correction control, the image control unit 313 controls the image forming unit shown in Fig. 1 to make preparations for forming detection patterns. After the preparations are complete, the CPU 311 requests the controller 301 to transmit an image signal corresponding to the detection patterns. In response to this request from the CPU 311, the controller 301 outputs the image signal to the engine control unit 302.

Upon receiving the image signal from the controller 301, an image processing GA (genetic algorithm) 312 transmits image formation data to the image control unit 313. The image control unit 313 controls the image forming unit to form detection patterns on the intermediate transfer belt 80 based on the image formation data. After that, the CPU 311 obtains voltage values corresponding to the densities of the detection patterns from the sensor unit 60. Based on the detected voltage values obtained from the sensor unit 60, the CPU 311 calculates a density correction amount of the formed detection pattern for each color, and calculates a misregistration correction amount of the detection pattern for each color in each of a main scanning direction and subscanning direction. After that, the CPU 311 notifies the controller 301 of the calculated misregistration correction amounts and density correction amounts via the interface unit 310.

Fig. 3B shows the arrangement of the CPU 311 and the sensor 201 of the sensor unit 60 according to this embodiment. Note that the arrangement of the CPU 311 and sensor 202 is the same. The CPU 311 transmits a driving signal from an I/O port to the light-emitting element 203, thereby controlling the light emission amount of the light-emitting element 203.
The light-receiving element 204 for diffuse reflection light outputs a signal corresponding to the received light amount to a binary conversion circuit and A/D port of the CPU 311. The binary conversion circuit binarizes the input voltage by using a comparator, and outputs the binary signal to the I/O port of the CPU 311. The CPU 311 detects the point of variation of the signal input to the I/O port, as the boundary between the colors of the detection patterns. The CPU 311 calculates a misregistration correction amount from the detected boundary. Also, the light-receiving element 205 for specular reflection light outputs a signal corresponding to the received light amount to an A/D port of the CPU 311. The A/D ports of the CPU 311 sample the input signals corresponding to the diffuse reflection light amount and specular reflection light amount, and save the sampled signals in a saving unit (not shown) connected to the CPU 311. The CPU 311 calculates a density correction amount from the signals input to the A/D ports and corresponding to the diffuse reflection light amount and specular reflection light amount.

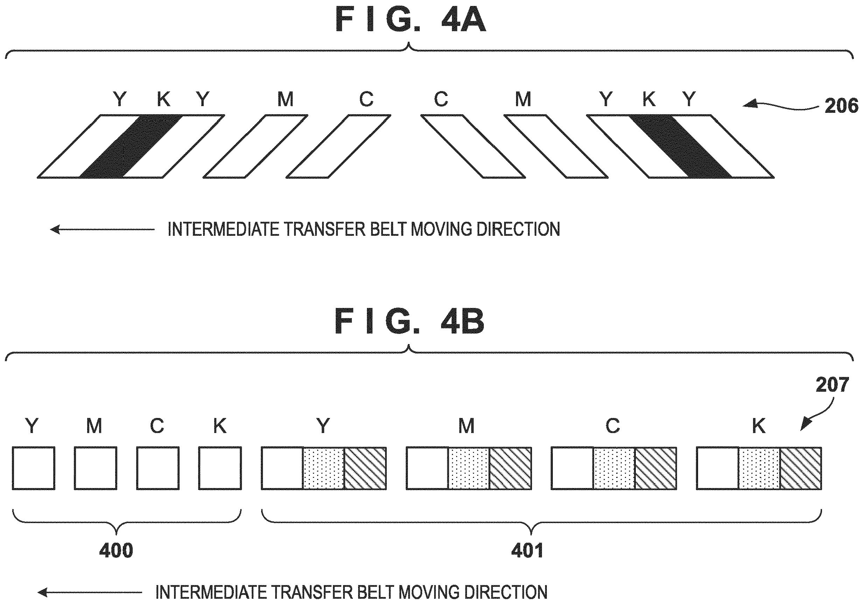

Figs. 4A and 4B are views showing detection patterns according to this embodiment. Fig. 4A shows a registration detection pattern 206, and Fig. 4B shows a density detection pattern 207. As shown in Fig. 4A, the registration detection pattern 206 includes a detection pattern obtained by forming a patch image of black K on a patch image of yellow Y, and patch images of magenta (M) and cyan (C). Note that it is also possible to form a patch image of black on a patch image of magenta or cyan, instead of yellow. The density detection pattern 207 includes density measurement patches 401 for measuring the densities of the individual colors, and reference patches 400 of the individual colors to be used to measure the reflection characteristic of the sensor, and specify the positions of the density measurement patches 401 of the individual colors. Note that the density measurement patch 401 of each color is formed by using toner images having a plurality of densities. Note also that in the following explanation, the yellow, magenta, and cyan portions of the registration detection pattern 206 will be called color regions, and the black portion of the registration detection pattern 206 will be called a black region.

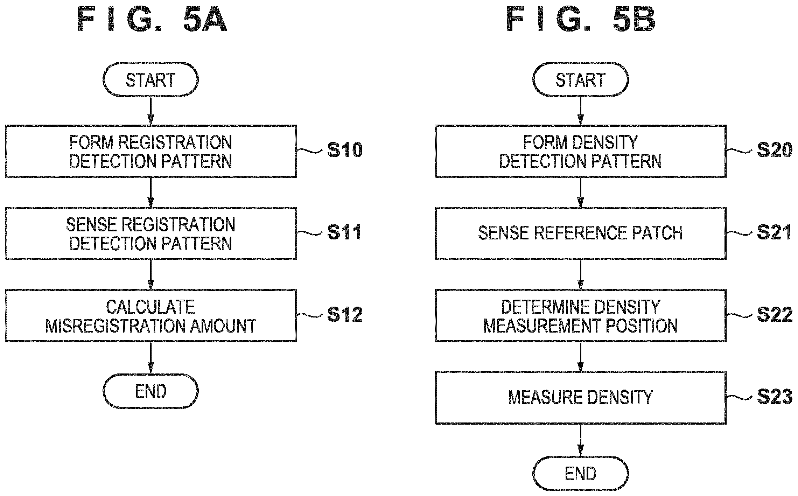

Fig. 5A is a flowchart of registration correction control. When registration correction control is started, the CPU 311 forms the registration detection pattern 206 shown in Fig. 4A on the intermediate transfer belt 80 in step S10. In step S11, the sensors 201 and 202 detect the formed registration detection pattern 206. In step S12, based on the detected position of the registration detection pattern 206, the CPU 311 calculates, with respect to the reference color, that is, yellow in Fig. 4A, the relative misregistration amounts of colors other than the reference color.

Fig. 5B is a flowchart of density correction control. When density correction control is started, the CPU 311 forms the density detection pattern 207 shown in Fig. 4B on the intermediate transfer belt 80 in step S20. In step S21, the CPU 311 detects the reference patches 400. In step S22, based on the detected positions of the reference patches 400 of the individual colors, the CPU 311 determines the density measurement positions of the density measurement patches 401 of the respective corresponding colors. Since the distance between the reference patch 400 and density measurement patch 401 of the same color is almost constant regardless of a misregistration amount from the reference color, the density can accurately be measured regardless of the misregistration amount by determining the density measurement position of the density measurement patch 401 based on the reference patch 400. In step S23, the CPU 311 measures the density of the density measurement patch 401 of each color by using the sampling value of reflection light in the determined density measurement position. Note that as will be described later, when performing registration correction control and density correction control by the same sequence, the registration detection pattern 206 and density detection pattern 207 are continuously formed and detected, and the correction amounts of the patterns are calculated.

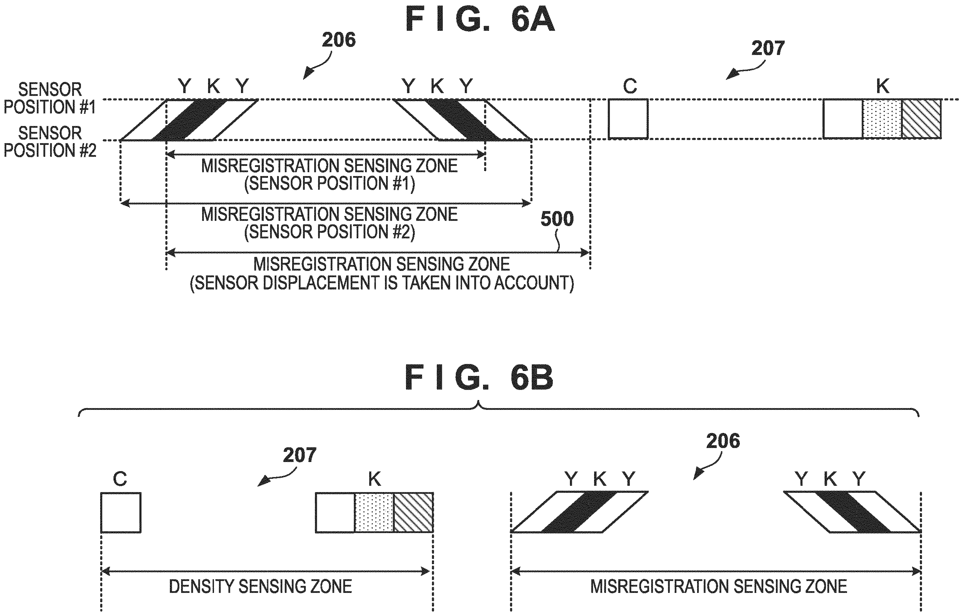

The order of the arrangement of the registration detection pattern 206 and density detection pattern 207 of this embodiment will be explained below with reference to Figs. 6A and 6B. In Fig. 6A, the registration detection pattern 206 is positioned on the front side of the density detection pattern 207. In Fig. 6B, the density detection pattern 207 is positioned on the front side of the registration detection pattern 206. Note that in the following explanation, "the front side" is the downstream side in the moving direction of the surface of the intermediate transfer belt 80, that is, the side that reaches the sensing region of the sensor unit 60 earlier. On the other hand, "the rear side" is the upstream side in the moving direction of the intermediate transfer belt 80.

In the registration detection pattern 206, the patches of the individual colors are obliquely formed in the moving direction of the intermediate transfer belt 80. Therefore, a sensing zone changes in accordance with the position of the sensor 201 or 202 in the main scanning direction, that is, in a direction perpendicular to the moving direction of the intermediate transfer belt 80. For example, the sensing zone is shortest in sensor position #1 shown in Fig. 6A, and longest in sensor position #2. It is difficult to determine the sensor position relative to the registration detection pattern 206 in advance, due to the variation in mounting position of the sensor 201 or 202, or displacement of the registration detection pattern 206 in the main scanning direction. Accordingly, the misregistration sensing zone must be set by taking account of the longest sensing zone. Even when the sensor is in sensor position #1 shown in Fig. 6A, therefore, the density detection pattern 207 cannot be formed until the end of the sensing zone denoted by reference numeral 500.

In this embodiment, therefore, the density detection pattern 207 (a second detection pattern) is positioned on the front side of the registration detection pattern 206 (a first detection pattern) as shown in Fig. 6B. Since the edges of the density detection pattern 207 are parallel to the main scanning direction, the sensing zone is unaffected by the fluctuation in relative positions of the density detection pattern 207 and sensor 201 or 202. Accordingly, when determining the formation position of the succeeding registration detection pattern 206, the fluctuation in sensing zone of the preceding density detection pattern 207 need not be taken into account. That is, it is possible to narrow the spacing between the density detection pattern 207 and registration detection pattern 206, and shorten the total sensing zone.

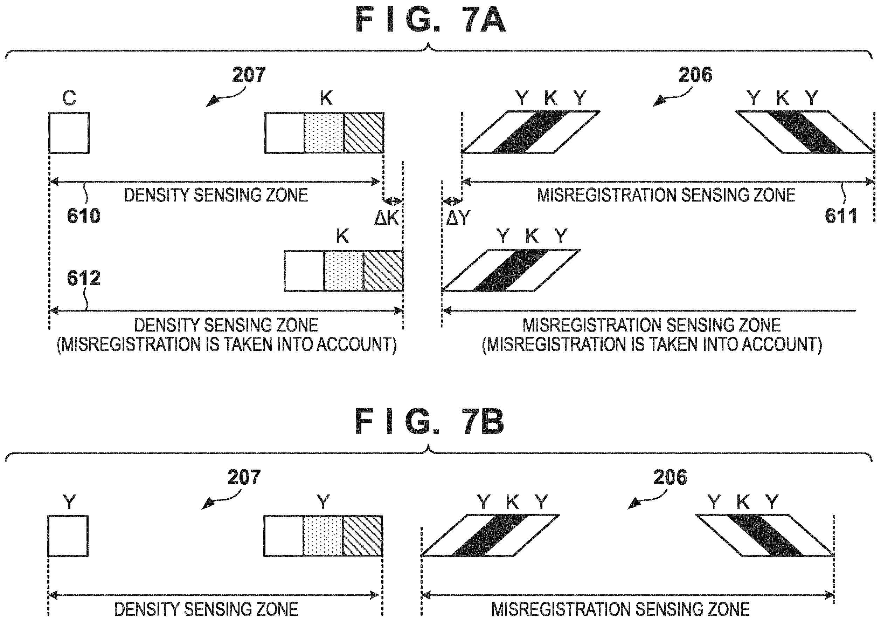

The arrangement of detection patterns unaffected by the misregistration of each color will now be explained. Fig. 7A shows an arrangement in which the first (leading) patch (cyan) and last patch (black) of the preceding density detection pattern 207 and the first patch (yellow) of the succeeding registration detection pattern 206 have different colors. Note that "first", "leading", and "last" indicate positions in the moving direction of the intermediate transfer belt 80. The upper portion of Fig. 7A shows a case in which no color misregistration occurs. In this case, the sensing zone of the density detection pattern 207 is a zone denoted by reference numeral 610, and the sensing zone of the registration detection pattern 206 is a zone denoted by reference numeral 611.

In practice, however, misregistration occurs between the first patch (cyan) and last patch (black) of the density detection pattern 207, so it is necessary to secure a sensing zone 612 taking account of this misregistration ΔK. Accordingly, the position of the registration detection pattern 206 must be shifted backward to cancel the misregistration. Similarly, misregistration may occur between the first patch (cyan) of the density detection pattern 207 and the first patch (yellow) of the registration detection pattern 206, so the registration detection pattern 206 must be positioned by taking account of misregistration ΔY.

That is, the succeeding registration detection pattern 206 must be positioned so as to be reliably detected even when the misregistrations ΔK and ΔY shown in Fig. 7A take a possible maximum value.

Fig. 7B shows the layout of the density detection pattern 207 and registration detection pattern 206 according to this embodiment. As shown in Fig. 7B, all of the first patch (yellow) and last patch (yellow) of the preceding density detection pattern 207 and the first and last patches (yellow) of the succeeding registration detection pattern 206 have the same color. This eliminates the fluctuation in density sensing zone, and obviates the need to take account of a fluctuation caused by a shift of the start position of the misregistration sensing zone. Consequently, it is possible to form a pattern layout unaffected by the misregistration of each color, and shorten the detection patterns by ΔK and ΔY shown in Fig. 7A.

Note that the spacing between the density detection pattern 207 and registration detection pattern 206 can be reduced by ΔY by changing only the first patch of the density detection pattern 207 shown in Fig. 7A to yellow. As a consequence, the first patch of the density detection pattern 207 and the last patch of the registration detection pattern 206 have the same color, so the color misregistration amount of the last patch of the registration detection pattern 206 need not be taken into consideration any more.
This is advantageous when the registration detection pattern 206 and density detection pattern 207 cover almost the circumference of the intermediate transfer belt 80 if these patterns are continuously formed. Also, when only the last patch of the density detection pattern 207 shown in Fig. 7A is changed to yellow, it is no longer necessary to take account of the color misregistration amount of a patch, which determines the spacing between the density detection pattern 207 and registration detection pattern 206. Furthermore, when only the last patch of the density detection pattern 207 shown in Fig. 7A is changed to cyan, it is no longer necessary to ensure a margin of ΔK shown in Fig. 7A. That is, it is only necessary to adopt an arrangement in which the first patch of the density detection pattern 207 and the last patch of the density detection pattern 207 or the first or last patch of the registration detection pattern 206 have the same color, or an arrangement in which the last patch of the density detection pattern 207 and the first patch of the registration detection pattern 206 have the same color.

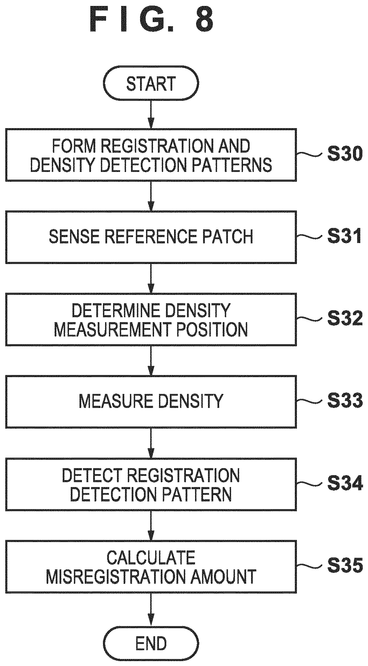

Fig. 8 is a flowchart of registration and density correction control according to this embodiment. When controls is started, the CPU 311 forms the density detection pattern 207 and registration detection pattern 206 on the intermediate transfer belt 80 as shown in, for example, Fig. 7B in step S30. In step S31, the CPU 311 detects the reference patches 400. In step S32, the CPU 311 determines the density measurement position of the density measurement patch 401 of each color from the detected position of the reference patch 400 of the same color. Since the distance between the reference patch 400 and density measurement patch 401 of the same color is almost constant regardless of the misregistration amount of the color, the density can accurately be measured regardless of the misregistration amount by determining the density measurement position of the density measurement patch 401 based on the reference patch 400. In step S33, the CPU 311 measures the density of the density measurement patch 401 of each color in the determined density measurement position. Subsequently, in step S34, the CPU 311 detects the formed registration detection pattern 206. In step S35, the CPU 311 calculates a misregistration amount relative to the reference color based on the detected position of the registration detection pattern 206.

The above-described arrangement can shorten the spacing between the detection patterns, and can decrease the length of the whole detection pattern. Note that in the above-mentioned embodiment, the density detection pattern 207 is formed on the front side of the registration detection pattern 206, and the first and last patches of the density detection pattern 206 and the first and last patches of the registration detection pattern 206 have the same color. However, it is also possible to form the density detection pattern 207 on the front side of the registration detection pattern 206, and arrange colors in an arbitrary order. This is so because the spacing between the detection patterns can be shortened as explained above with reference to Fig. 6B.

Furthermore, it is also possible to form the registration detection pattern 206 on the front side of the density detection pattern 207, and arrange colors in the order as explained above with reference to Fig. 7B. This is so because, as is apparent from the explanation of Figs. 7A and 7B, the spacing between the detection patterns can be shortened regardless of the arrangement order of the detection patterns. Note that various changes based on the scope of the invention as defined in the appending claims can be made, for example, it is possible to change the number of sets of the registration detection pattern 206 and density detection pattern 207 to be formed, and use a reference color other than yellow.

### <Second Embodiment>

In the second embodiment, differences from the first embodiment will mainly be explained, and an explanation of the same features as those of the first embodiment will be omitted.

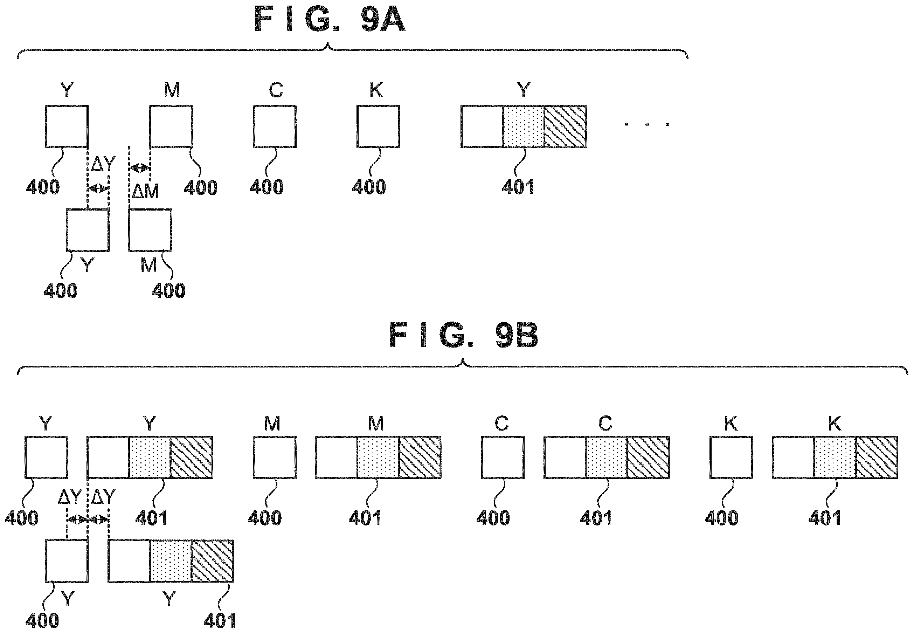

Figs. 9A and 9B are views for explaining a density detection pattern 207 according to this embodiment. Fig. 9A shows a pattern in which reference patches 400 of individual colors are arranged first, and density measurement patches 401 are arranged after that. In this pattern, the reference patches 400 of the individual colors and the density measurement patches 401 of the individual colors are arranged such that adjacent patches have different colors, so misregistration of adjacent colors must be taken into consideration. For example, the yellow reference patch 400 and magenta reference patch 400 must be arranged so that they can be detected even when they are misregistered nearer to each other. That is, the distance between the yellow and magenta patches must be determined so that they can be detected even when misregistration ΔY of yellow and misregistration ΔM of magenta occur nearer to each other.

Fig. 9B shows a layout according to this embodiment. In this embodiment, the density measurement patches 401 of the individual colors are formed immediately after their respective corresponding reference patches 400. Accordingly, no relative misregistration occurs between the yellow reference patch 400 and yellow density measurement patch 401, so the distance between the reference patch 400 and density measurement patch 401 does not fluctuate. Consequently, the sensing zone can be shortened by a distance corresponding to the total value of ΔY and ΔM shown in Fig. 9A. This similarly applies to other colors.

The layout unaffected by the misregistration of each color has been explained above for each patch of the density detection pattern 207. Note that the reference patch 400 and density measurement patch 401 of the same color are continuously formed for all colors in the above-mentioned embodiment, but it is also possible to perform this formation for at least one color. Note also that this embodiment can also be combined with the first embodiment. The embodiments described above are exemplary embodiments. Therefore, these embodiments can variously be changed based on the scope of the invention as defined in the appending claims, and do not limit the invention.

### Other Embodiments

Aspects of the present invention can also be realized by a computer of a system or apparatus (or devices such as a CPU (central processing unit) or MPU (micro processing unit)) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation while limiting all such modifications and equivalent structures and functions.

## Claims

1. An image forming apparatus comprising:
forming means (9) including a plurality of developing means (8) for continuously forming, on an intermediate transfer belt (80), a first detection pattern (206) including a plurality of patches for detecting relative misregistration amounts of developer images of a plurality of colors, and a second detection pattern (207) including a plurality of patches for detecting a density of each of the plurality of colors;
detection means (201, 202) for detecting the first detection pattern (206) and the second detection pattern (207); and
control means (311) for controlling registration in accordance with a detection result of the first detection pattern (206) detected by the detection means (201, 202) and controlling the density in accordance with a detection result of the second detection pattern (207) detected by the detection means (201, 202),
wherein said control means (311) causes a single developing means (8) to form a first patch at a leading edge of a detection pattern formed on a front side among the first and second detection patterns (206, 207), in a direction in which the detection patterns are moved by rotation of the intermediate transfer belt, and a last patch at a trailing edge of the detection pattern formed on the front side, or a first or last patch at one edge of a detection pattern formed on a rear side among the first and second detection patterns (206, 207).

2. An image forming apparatus comprising:
forming means (9) including a plurality of developing means (8) for continuously forming, on an intermediate transfer belt (80), a first detection pattern (206) including a plurality of patches for detecting relative misregistration amounts of developer images of a plurality of colors, and a second detection pattern (207) including a plurality of patches for detecting a density of each of the plurality of colors;
detection means (201, 202) for detecting the first detection pattern (206) and the second detection pattern (207); and
control means (311) for controlling registration in accordance with a detection result of the first detection pattern (206) detected by the detection means (201, 202) and controlling the density in accordance with a detection result of the second detection pattern (207) detected by the detection means (201, 202),
wherein said control means (311) causes a single developing means (8) to form a first patch at a trailing edge of a detection pattern formed on a front side among the first and second detection patterns (206, 207), in a direction in which the detection patterns are moved by rotation of the intermediate transfer belt, and a last patch at a leading edge of a detection pattern formed on the rear side among the first and second detection patterns (206, 207).

3. The apparatus according to claim 1 or 2, wherein
the second detection pattern (207) has an edge in a direction perpendicular to the moving direction, and
said forming means (9) forms the first detection pattern (206) on a rear side of the second detection pattern (207) in the moving direction.

4. The apparatus according to any one of claims 1 to 3, wherein
the second detection pattern (207) includes, for each of the plurality of colors, density measurement patches having a plurality of densities, and a reference patch for specifying a position of the density measurement patches, and
said forming means (9) forms the density measurement patches of at least one of the plurality of colors next to the reference patch of the same color.

5. The apparatus according to any one of claims 1 to 4, wherein
the first detection pattern (206) includes patches of the plurality of colors,
the second detection pattern (207) includes density measurement patches having a plurality of densities for each of the plurality of colors,
the detection means (201, 202) emits light to the intermediate transfer belt and detects reflection light, and
said control means (311) corrects the registration by calculating a misregistration amount based on positions of the patches of the plurality of colors of the first detection pattern (206) detected by said detection means (201, 202), and corrects the density by measuring the density of each density measurement patch of the second detection pattern (207) detected by said detection means (201, 202), based on reflection light from the density measurement patches.

6. The apparatus according to any one of claims 1 to 5, wherein said detection means (201, 202) detects the first detection pattern (206) and the second detection pattern (207) as unfixed images.

7. The apparatus according to any one of claims 1 to 5, wherein the first detection pattern (206) and the second detection pattern (207) are unfixed images formed on the intermediate transfer belt (80).

8. The apparatus according to any one of claims 1 to 7, wherein a space between the detection patterns formed on the front side and the rear side formed by the forming means (9) becomes a predetermined space.

9. The apparatus according to any one of claims 1 to 7, wherein a space between the detection patterns formed on the front side and the rear side formed by the forming means (9) is smaller than a space between two density measurement patches formed by different developing means (8) of a plurality of density measurement patches included in the second detection pattern.

## Patentansprüche

1. Bilderzeugungsvorrichtung, mit:
einer Erzeugungseinrichtung (9) mit einer Vielzahl von Entwicklungseinrichtungen (8), um auf einem Zwischentransferband (80) ein erstes Erfassungsmuster (206) mit einer Vielzahl von Feldern zum Erfassen eines relativen Fehlregistrierungsbetrags von Entwicklerbildern einer Vielzahl von Farben und ein zweites Erfassungsmuster (207) mit einer Vielzahl von Feldern zum Erfassen einer Dichte von jeder der Vielzahl von Farben kontinuierlich zu erzeugen;
einer Erfassungseinrichtung (201, 202) zum Erfassen des ersten Erfassungsmusters (206) und des zweiten Erfassungsmusters (207); und
einer Steuerungseinrichtung (311) zum Steuern einer Registrierung gemäß einem Erfassungsergebnis des ersten Erfassungsmusters (206), das durch die Erfassungseinrichtung (201, 202) erfasst wird, und Steuern der Dichte gemäß einem Erfassungsergebnis des zweiten Erfassungsmusters (207), das durch die Erfassungseinrichtung (201, 202) erfasst wird,
wobei die Steuerungseinrichtung (311) veranlasst, dass eine einzelne Entwicklungseinrichtung (8) ein erstes Feld an einer führenden Kante eines Erfassungsmusters, das auf einer vorderen Seite unter den ersten und zweiten Erfassungsmustern (206, 207) erzeugt ist, erzeugt, in eine Richtung, in die die Erfassungsmuster durch Rotieren des Zwischentransferbandes bewegt werden, und ein letztes Muster an einer nachlaufenden Kante des Erfassungsmusters, das auf der vorderen Seite erzeugt ist, erzeugt, oder ein erstes oder letztes Feld an einer Kante eines Erzeugungsmusters erzeugt, das auf einer hinteren Seite unter den ersten und zweiten Erfassungsmustern (206, 207) erzeugt wird.

2. Bilderzeugungsvorrichtung, mit:
einer Erzeugungseinrichtung (9) mit einer Vielzahl von Entwicklungseinrichtungen (8), um auf einem Zwischentransferband (80) ein erstes Erfassungsmuster (206) mit einer Vielzahl von Feldern zum Erfassen von relativen Fehlregistrierungsbeträgen von Entwicklerbildern einer Vielzahl von Farben und ein zweites Erfassungsmuster (207) mit einer Vielzahl von Feldern zum Erfassen einer Dichte von jeder der Vielzahl von Farben kontinuierlich zu erzeugen;
einer Erfassungseinrichtung (201, 202) zum Erfassen des ersten Erfassungsmusters (206) und des zweiten Erfassungsmusters (207); und
einer Steuerungseinrichtung (311) zum Steuern einer Registrierung gemäß einem Erfassungsergebnis des ersten Erfassungsmusters (206), das durch die Erfassungseinrichtung (201, 202) erfasst wird, und Steuern der Dichte gemäß einem Erfassungsergebnis des zweiten Erfassungsmusters (207), das durch die Erfassungseinrichtung (201, 202) erfasst wird,
wobei die Steuerungseinrichtung (311) veranlasst, dass eine einzelne Entwicklungseinrichtung (8) ein erstes Muster an einer nachlaufenden Kante eines Erfassungsmusters, das auf einer vorderen Seite unter den ersten und zweiten Erfassungsmustern (206, 207) erzeugt ist, erzeugt, in eine Richtung, in die die Erfassungsmuster durch Rotieren des Zwischentransferbandes bewegt werden, und ein letztes Muster an einer führenden Kante eines Erfassungsmusters zu erzeugen, das auf der hinteren Seite unter den ersten und zweiten Erfassungsmustern (206, 207) erzeugt wird.

3. Vorrichtung gemäß Anspruch 1 oder 2, wobei
das zweite Erfassungsmuster (207) eine Kante in eine Richtung senkrecht zu der Bewegungsrichtung aufweist, und
die Erzeugungseinrichtung (9) das erste Erfassungsmuster (206) auf einer hinteren Seite des zweiten Erfassungsmusters (207) in der Bewegungsrichtung erzeugt.

4. Vorrichtung gemäß einem der Ansprüche 1 bis 3, wobei
das zweite Erfassungsmuster (207) für jede der Vielzahl von Farben Dichtemessfelder mit einer Vielzahl von Dichten und ein Referenzfeld zum Spezifizieren einer Position der Dichtemessfelder umfasst, und
die Erzeugungseinrichtung (9) die Dichtemessfelder von zumindest einer der Vielzahl von Farben neben dem Referenzfeld der gleichen Farbe erzeugt.

5. Vorrichtung gemäß einem der Ansprüche 1 bis 4, wobei
das erste Erfassungsmuster (206) Felder der Vielzahl von Farben umfasst,
das zweite Erfassungsmuster (207) Dichtemessfelder mit einer Vielzahl von Dichten für jede der Vielzahl von Farben umfasst,
die Erfassungseinrichtung (201, 202) Licht auf das Zwischentransferband aussendet und reflektiertes Licht erfasst, und
die Steuerungseinrichtung (311) die Registrierung korrigiert, durch Berechnen eines Fehlregistrierungsbetrags basierend auf Positionen der Felder der Vielzahl von Farben des ersten Erfassungsmusters (206), die durch die Erfassungseinrichtung (201, 202) erfasst werden, und die Dichte korrigiert, durch Messen der Dichte von jedem Dichtemessfeld des zweiten Erfassungsmusters (207), die durch die Erfassungseinrichtung (201, 202) erfasst wird, basierend auf reflektiertem Licht von den Dichtemessfeldern.

6. Vorrichtung gemäß einem der Ansprüche 1 bis 5, wobei die Erfassungseinrichtung (201, 202) das erste Erfassungsmuster (206) und das zweite Erfassungsmuster (207) als unfixierte Bilder erfasst.

7. Vorrichtung gemäß einem der Ansprüche 1 bis 5, wobei das erste Erfassungsmuster (206) und das zweite Erfassungsmuster (207) unfixierte Bilder sind, die auf dem Zwischentransferband (80) erzeugt werden.

8. Vorrichtung gemäß einem der Ansprüche 1 bis 7, wobei ein Raum zwischen den Erfassungsmustern, die auf der vorderen Seite und der hinteren Seite erzeugt werden, die durch die Erzeugungseinrichtung (9) erzeugt werden, ein vorbestimmter Raum wird.

9. Vorrichtung gemäß einem der Ansprüche 1 bis 7, wobei ein Raum zwischen den Erfassungsmustern, die auf der vorderen Seite und der hinteren Seite erzeugt werden, die durch die Erzeugungseinrichtung (9) erzeugt werden, kleiner ist als ein Raum zwischen zwei Dichtemessfeldern, die durch unterschiedliche Entwicklungseinrichtungen (8) erzeugt werden, einer Vielzahl von Dichtemessfeldern, die in dem zweiten Erfassungsmuster enthalten sind.

## Revendications

1. Appareil de formation d'image, comprenant :
un moyen de formation (9) comprenant une pluralité de moyens de développement (8) destinés à former en continu, sur une bande de transfert intermédiaire (80), un premier motif de détection (206) comprenant une pluralité de carreaux permettant de détecter des quantités de défaut d'alignement relatif d'images de développateur d'une pluralité de couleurs, et un second motif de détection (207) comprenant une pluralité de carreaux permettant de détecter une densité de chaque couleur de la pluralité de couleurs ;
un moyen de détection (201, 202) destiné à détecter le premier motif de détection (206) et le second motif de détection (207) ; et
un moyen de commande (311) destiné à commander un alignement conformément à un résultat de détection du premier motif de détection (206) détecté par le moyen de détection (201, 202) et à commander la densité conformément à un résultat de détection du second motif de détection (207) détecté par le moyen de détection (201, 202),
dans lequel ledit moyen de commande (311) amène un unique moyen de développement (8) à former un premier carreau au niveau d'un bord de tête d'un motif de détection formé d'un côté avant entre les premier et second motifs de détection (206, 207), dans un sens dans lequel les motifs de détection sont déplacés par une rotation de la bande de transfert intermédiaire, et un dernier carreau au niveau d'un bord de queue du motif de détection formé du côté avant, ou un premier ou dernier carreau au niveau d'un bord d'un motif de détection formé d'un côté arrière entre les premier et second motifs de détection (206, 207).

2. Appareil de formation d'image, comprenant :
un moyen de formation (9) comprenant une pluralité de moyens de développement (8) destinés à former en continu, sur une bande de transfert intermédiaire (80), un premier motif de détection (206) comprenant une pluralité de carreaux permettant de détecter des quantités de défaut d'alignement relatif d'images de développateur d'une pluralité de couleurs, et un second motif de détection (207) comprenant une pluralité de carreaux permettant de détecter une densité de chaque couleur de la pluralité de couleurs ;
un moyen de détection (201, 202) destiné à détecter le premier motif de détection (206) et le second motif de détection (207) ; et
un moyen de commande (311) destiné à commander un alignement conformément à un résultat de détection du premier motif de détection (206) détecté par le moyen de détection (201, 202) et à commander la densité conformément à un résultat de détection du second motif de détection (207) détecté par le moyen de détection (201, 202),
dans lequel ledit moyen de commande (311) amène un unique moyen de développement (8) à former un premier carreau au niveau d'un bord de queue d'un motif de détection formé d'un côté avant entre les premier et second motifs de détection (206, 207), dans un sens dans lequel les motifs de détection sont déplacés par une rotation de la bande de transfert intermédiaire, et un dernier carreau au niveau d'un bord de tête d'un motif de détection formé du côté arrière entre les premier et second motifs de détection (206, 207).

3. Appareil selon la revendication 1 ou 2, dans lequel
le second motif de détection (207) comporte un bord dans une direction perpendiculaire au sens de déplacement, et
ledit moyen de formation (9) forme le premier motif de détection (206) d'un côté arrière du second motif de détection (207) dans le sens de déplacement.

4. Appareil selon l'une quelconque des revendications 1 à 3, dans lequel
le second motif de détection (207) comprend, pour chaque couleur de la pluralité de couleurs, des carreaux de mesure de densité ayant une pluralité de densités, et un carreau de référence permettant de spécifier une position des carreaux de mesure de densité, et
ledit moyen de formation (9) forme les carreaux de mesure de densité d'au moins l'une de la pluralité de couleurs à proximité du carreau de référence de la même couleur.

5. Appareil selon l'une quelconque des revendications 1 à 4, dans lequel
le premier motif de détection (206) comprend des carreaux de la pluralité de couleurs,
le second motif de détection (207) comprend des carreaux de mesure de densité ayant une pluralité de densités pour chacune de la pluralité de couleurs,
le moyen de détection (201, 202) émet de la lumière vers la bande de transfert intermédiaire et détecte une lumière de réflexion, et
ledit moyen de commande (311) corrige l'alignement par un calcul d'une quantité de défaut d'alignement basée sur des positions des carreaux de la pluralité de couleurs du premier motif de détection (206) détecté par ledit moyen de détection (201, 202), et corrige la densité par une mesure de la densité de chaque carreau de mesure de densité du second motif de détection (207) détecté par ledit moyen de détection (201, 202), sur la base d'une lumière de réflexion provenant des carreaux de mesure de densité.

6. Appareil selon l'une quelconque des revendications 1 à 5, dans lequel ledit moyen de détection (201, 202) détecte le premier motif de détection (206) et le second motif de détection (207) en tant qu'images non fixées.

7. Appareil selon l'une quelconque des revendications 1 à 5, dans lequel le premier motif de détection (206) et le second motif de détection (207) sont des images non fixées formées sur la bande de transfert intermédiaire (80).

8. Appareil selon l'une quelconque des revendications 1 à 7, dans lequel un espace entre les motifs de détection formés du côté avant et du côté arrière, formés par le moyen de formation (9), devient un espace prédéterminé.

9. Appareil selon l'une quelconque des revendications 1 à 7, dans lequel un espace entre les motifs de détection formés du côté avant et du côté arrière, formés par le moyen de formation (9), est plus petit qu'un espace entre deux carreaux de mesure de densité formés par des moyens de développement différents (8) d'une pluralité de carreaux de mesure de densité compris dans le second motif de détection.
